# EUROPEAN PATENT APPLICATION

(11) **EP 1 727 037 A2**
(43) Date of publication of application: **29.11.2006**
(21) Application number: 06252166.1
(22) Date of filing: 21.04.2006
(51) Int. Cl.: G06F 3/12

(54) **Information reading apparatus, information management apparatus, printing apparatus, print control method using an information storage medium, a computer program and a computer readable storage medium**

(30) Priority: 26.05.2005 JP 2005154262
(71) Applicant: Ricoh Company, Ltd., Tokyo 143-8555 (JP)
(72) Inventor: Nagahara, Takanori, Yokohama-shi, Kanagawa (JP); Hinohara, Hiroshi, Kawasaki-shi, Kanagawa (JP); Asai, Takahiro, Kanagawa (JP)
(74) Representative: Leeming, John Gerard

(57) **Abstract**

An information reading apparatus is disclosed that includes an information reading unit which reads stored print request data from an information storage medium, an information generating unit which generates print request communication data according to the stored print request data, and an information transmitting unit which transmits the print request communication data. The information generating unit generates the print request communication data based on the success/failure of reading the stored print request data.

## Description

The present invention generally relates to an information reading apparatus such as a personal computer, an information management apparatus such as a personal computer, a printing apparatus such as a printer, copier, or multifunction copier, and a print control method.

In the following patent documents, various inventions relating to print control methods are disclosed.

Patent document 1 discloses an invention related to a print control method which enables canceling a print process being executed on a printer by performing the cancel operation of the print process using a personal computer.

Patent document 2 discloses an invention related to a print control method which enables the deletion of print data on a printer by performing the delete operation of the print process using a personal computer.

Patent document 3 discloses an invention related to a print control method which utilizes the correspondence between print data and the ID information in a radio frequency identification (RFID) chip on a print sheet.

Patent document 4 discloses an invention related to a print control method in which an IC card is used for inputting an ID for requesting printing from a personal computer and an ID for executing a print job on a printer.

[Patent document 1] Japanese Patent Application Publication No. 11-232056

[Patent document 2] Japanese Patent Application Publication No. 2003-044243

[Patent document 3] Japanese Patent Application Publication No. 2004-249499

[Patent document 4] Japanese Patent Application Publication No. 2005-001155

In the inventions disclosed in patent documents 1 and 2, print control such as the cancellation of a print process or the deletion of print data is performed through the operations on an operations screen. In the inventions disclosed in patent documents 3 and 4, print control such as user identification is performed using the stored information in a storage medium. For users, print control operations using a storage medium are more convenient than print control operations using an operations screen. Therefore, extending the application field of print control operations using a storage medium will improve convenience for users.

The present invention may provide a new print control method using an information storage medium.

An embodiment of the present invention may provide an information reading apparatus including an information reading unit which reads stored print request data from an information storage medium, an information generating unit which generates print request communication data according to the stored print request data, and an information transmitting unit which transmits the print request communication data. The information generating unit generates the print request communication data based on the success/failure of reading the stored print request data.

According to an aspect of the present invention, an information management apparatus includes an information receiving unit which receives print request communication data, an information retrieving unit which retrieves print data corresponding to a print request in the print request communication data, and an information transmitting unit which transmits the print data. The information transmitting unit transmits the print data based on the success/failure of reading stored print request data used for generating the print request communication data.

An embodiment of the present invention provides a printing apparatus including an information receiving unit which receives print request communication data, an information retrieving unit which retrieves print data corresponding to a print request in the print request communication data, and a printing unit which prints the print data. The printing unit prints the print data based on the success/failure of reading stored print request data used for generating the print request communication data.

An embodiment of the present invention provides a printing apparatus including an information reading unit which reads stored print request data from an information storage medium, an information generating unit which generates print request communication data according to the stored print request data, an information transmitting unit which transmits the print request communication data, an information receiving unit which receives print data corresponding to a print request in the print request communication data, and a printing unit which prints the print data. The information generating unit generates the print request communication data based on the success/failure of reading the stored print request data.

An embodiment of the present invention provides a printing apparatus including an information reading unit which reads stored print request data from an information storage medium, an information retrieving unit which retrieves print data corresponding to a print request in the stored print request data, and a printing unit which prints the print data. The printing unit prints the print data based on the success/failure of reading the stored print request data.

An embodiment of the present invention provides a print control method, which is performed by an information reading apparatus, including an information reading step which reads stored print request data from an information storage medium, an information generating step which generates print request communication data according to the stored print request data, and an information transmitting step which transmits the print request communication data. The information generating step generates the print request communication data based on the success/failure of reading the stored print request data.

An embodiment of the present invention provides a print control method, which is performed by an information management apparatus, including an information receiving step which receives print request communication data, an information retrieving step which retrieves print data corresponding to a print request in the print request communication data, and an information transmitting step which transmits the print data. The information transmitting step transmits the print data based on the success/failure of reading stored print request data used for generating the print request communication data.

An embodiment of the present invention provides a print control method, which is performed by a printing apparatus, including an information receiving step which receives print request communication data, an information retrieving step which retrieves print data corresponding to a print request in the print request communication data, and a printing step which prints the print data. The printing step prints the print data based on the success/failure of reading stored print request data used for generating the print request communication data.

An embodiment of the present invention provides a print control method, which is performed by a printing apparatus, including an information reading step which reads stored print request data from an information storage medium, an information generating step which generates print request communication data according to the stored print request data, an information transmitting step which transmits the print request communication data, an information receiving step which receives print data corresponding to a print request in the print request communication data, and a printing step which prints the print data. The information generating step generates the print request communication data based on the success/failure of reading the stored print request data.

An embodiment of the present invention provides a print control method, which is performed by a printing apparatus, including an information reading step which reads stored print request data from an information storage medium, an information retrieving step which retrieves print data corresponding to a print request in the stored print request data, and a printing step which prints the print data. The printing step prints the print data based on the success/failure of reading the stored print request data.

The invention will now be described with reference to the accompanying non-limiting drawings:
FIG. 1 shows a printing system in a first embodiment;
FIG. 2 is a flowchart of the print control performed in the printing system in the first embodiment;
FIG. 3 shows a printing system in a second embodiment;
FIG. 4 is a flowchart of the print control performed in the printing system in the second embodiment;
FIG. 5 shows a printing system in a third embodiment;
FIG. 6 is a flowchart of the print control performed in the printing system in the third embodiment;
FIG. 7 shows a printing system in a fourth embodiment;
FIG. 8 is a flowchart of the print control performed in the printing system in the fourth embodiment.

In the following, embodiments of the present invention are described in detail with reference to accompanying drawings.

### 1. First Embodiment

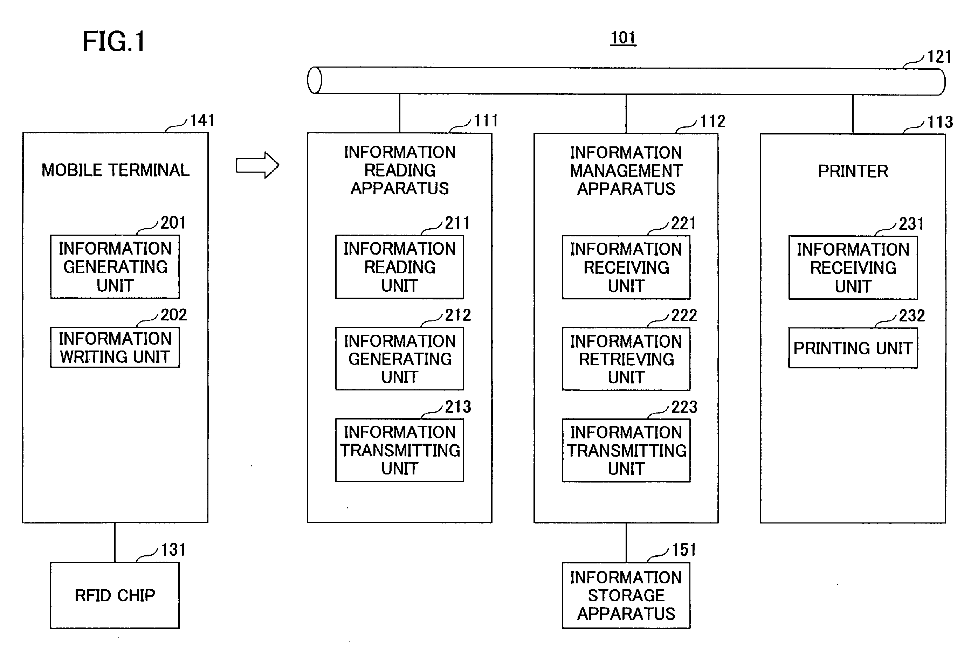

FIG. 1 shows a printing system 101 in the first embodiment. The printing system 101 shown in FIG. 1 includes an information reading apparatus 111 which is a client PC for reading information, an information management apparatus 112 which is a server PC for managing information, and a printer 113. In the printing system 101 shown in FIG. 1, the information reading apparatus 111, the information management apparatus 112, and the printer 113 are connected by a network 121 such as a LAN or a WAN. To access the printing system 101 shown in FIG. 1, a mobile terminal 141, such as a mobile phone or a personal digital assistant, which is equipped with a RFID chip 131 implemented as a RFID tag or a RFID card, is used.

The mobile terminal 141 includes functional blocks such as an information generating unit 201 and an information writing unit 202. The information generating unit 201 generates stored print request data (data stored in an information storage medium and used for exchanging print requests). The information writing unit 202 writes stored print request data into the RFID chip 131 in the mobile terminal 141.

The information reading apparatus 111 includes functional blocks such as an information reading unit 211, an information generating unit 212, and an information transmitting unit 213. The information reading unit 211 reads stored print request data from the RFID chip 131 in the mobile terminal 141. The information generating unit 212 generates print request communication data (data transmitted in data communication and used for exchanging print requests) according to the stored print request data. The information transmitting unit 213 transmits the print request communication data to outside the information reading apparatus 111.

The information management apparatus 112 includes functional blocks such as an information receiving unit 221, an information retrieving unit 222, and an information transmitting unit 223. The information receiving unit 221 receives print request communication data from outside the information management apparatus 112. The information retrieving unit 222 retrieves print data corresponding to a print request in the print request communication data from inside or outside the information management apparatus 112. The information transmitting unit 223 transmits the print data to outside the information management apparatus 112.

The printer 113 includes functional blocks such as an information receiving unit 231 and a printing unit 232. The information receiving unit 231 receives print data from outside the printer 113. The printing unit 232 prints the print data.

The stored print request data and the print request communication data may contain information such as: identification information of print content; identification information, preference information, billing information, and location information of a user; and identification information and location information of a printing apparatus. A uniform resource locator (URL) and a uniform resource name (URN) of print contents are examples of the print-content identification information. An Internet protocol (IP) address of a printing apparatus is an example of the printing apparatus location information. For information with a large data size such as the printing apparatus location information, because of the capacity of the information storage medium, it is acceptable to attach the information only to the print request communication data and not to the stored print request data. For the description format of the stored print request data and the print request communication data, either a structured description format such as the extensible markup language (XML) or an unstructured description format such as a text description may be used.

In the first embodiment, since the RFID chip 131 is used as the information storage medium for print requests, a wireless connection is employed for the exchange of print requests using the information storage medium. When any other information storage medium is used for print requests, a wireless connection using a technology such as infrared, IEEE 802.11b, or Bluetooth (registered trademark), or a wired connection using a technology such as USB, IEEE 1394, or Ethernet (registered trademark) is employed for the exchange of print requests using the information storage medium. When a memory card is employed, a slot for inserting the memory card may be used.

The information retrieving unit 222 may be implemented so as to retrieve print data from an information storage apparatus 151 such as a hard disk drive or a ROM in the information management apparatus 112, or to retrieve print data from outside the information management apparatus 112 by using a communication method such as the network file system (NFS), the file transfer protocol (FTP), or the hyper text transfer protocol (HTTP). The former (internal retrieval) has an advantage of being able to reduce printing time, and the latter (external retrieval) has an advantage of being able to effectively use a network environment. In the case where the information retrieving unit 222 retrieves print data from the information storage apparatus 151, it is acceptable to provide, in the information management apparatus 112, an information deleting unit which deletes stored print-related data in the information storage apparatus 151, and make the information management apparatus 112 handle the information deleting processing in which stored print-related data in the information storage apparatus 151 are deleted. The stored print-related data may include data similar to the stored print request data or the print request communication data, and print related data such as number of copies, number of pages, printing color, and print size. The information deleting processing by the information deleting unit prevents reduction in availability of the information storage area in the information storage apparatus 151.

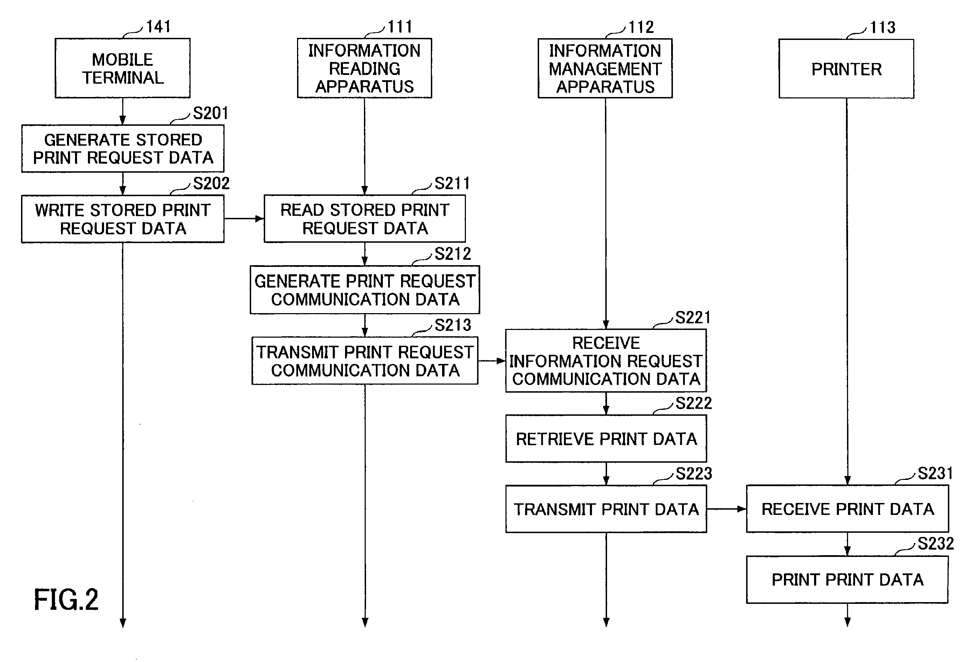

FIG. 2 is a flowchart of the print control performed in the printing system 101 in the first embodiment.

First, the mobile terminal 141 generates stored print request data (S201). The mobile terminal 141 writes the stored print request data into the RFID chip 131 (S202).

Next, the information reading apparatus 111 reads the stored print request data from the RFID chip 131 (S211). The information reading apparatus 111 generates print request communication data according to the stored print request data (S212). The information reading apparatus 111 transmits the information request communication data to outside the information reading apparatus 111 (S213).

Then, the information management apparatus 112 receives the information request communication data from the information reading apparatus 111 (S221). The information management apparatus 112 retrieves print data corresponding to a print request in the print request communication data from inside or outside of the information management apparatus 112 (S222). The information management apparatus 112 transmits the print data to outside the information management apparatus 112 (S223).

The printer 113 receives the print data from the information management apparatus 112 (S231). Finally, the printer 113 prints the print data (S232).

The process in S211 shown in FIG. 2 is explained below. When the RFID chip 131 in the mobile terminal 141 is put close to the information reading apparatus 111, the information reading apparatus 111 can read the stored print request data from the RFID chip 131 in the mobile terminal 141. When the RFID chip 131 in the mobile terminal 141 is moved away from the information reading apparatus 111, the information reading apparatus 111 cannot read the stored print request data from the RFID chip 131 in the mobile terminal 141.

The process in S212 shown in FIG. 2 is explained below. The information reading apparatus 111 generates the print request communication data based on the success/failure of reading the stored print request data from the RFID chip 131 in the mobile terminal 141. When the entirety of the stored print request data is read successfully, the information indicating the success in reading the stored print request data is attached to the print request communication data. When the reading of the stored print request data fails in the middle, the information indicating the failure in reading the stored print request data is attached to the print request communication data.

The process in S223 shown in FIG. 2 is explained below. The information management apparatus 112 transmits print data based on the success/failure of reading the stored print request data from the RFID chip 131 in the mobile terminal 141. In other words, the information management apparatus 112 transmits print data based on the success/failure of the reading process performed by the information reading apparatus 111 on the stored print request data used for generating the print request communication data. When information indicating the success in reading the stored print request data is attached to the print request communication data and the success in reading the stored print request data is detected, the information management apparatus 112 transmits the print data. When information indicating the failure in reading the stored print request data is attached to the print request communication data and the failure in reading the stored print request data is detected, the information management apparatus 112 cancels the transmission of the print data.

According to the processes in S212 and S223 shown in FIG. 2, if the mobile terminal 141 is moved away from the information reading apparatus 111 during the reading of the stored print request data, the printing will be canceled. Therefore, users can cancel printing with such a simple operation as moving the mobile terminal 141 away from the information reading apparatus 111 during the reading of the stored print request data. Consequently, the processes in S212 and S223 shown in FIG. 2 will improve the convenience for users.

### 2. Second Embodiment

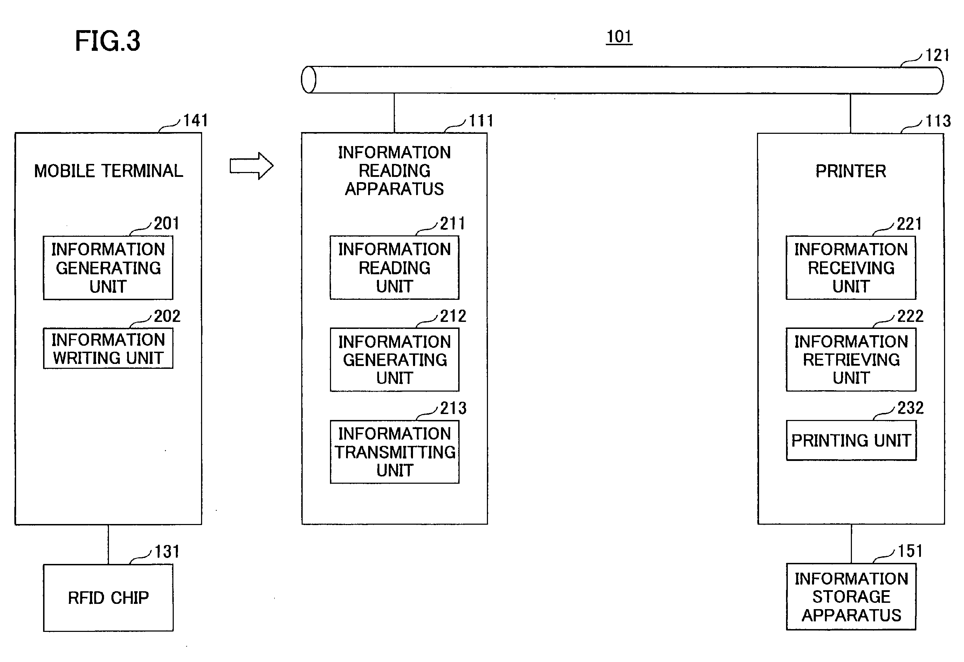

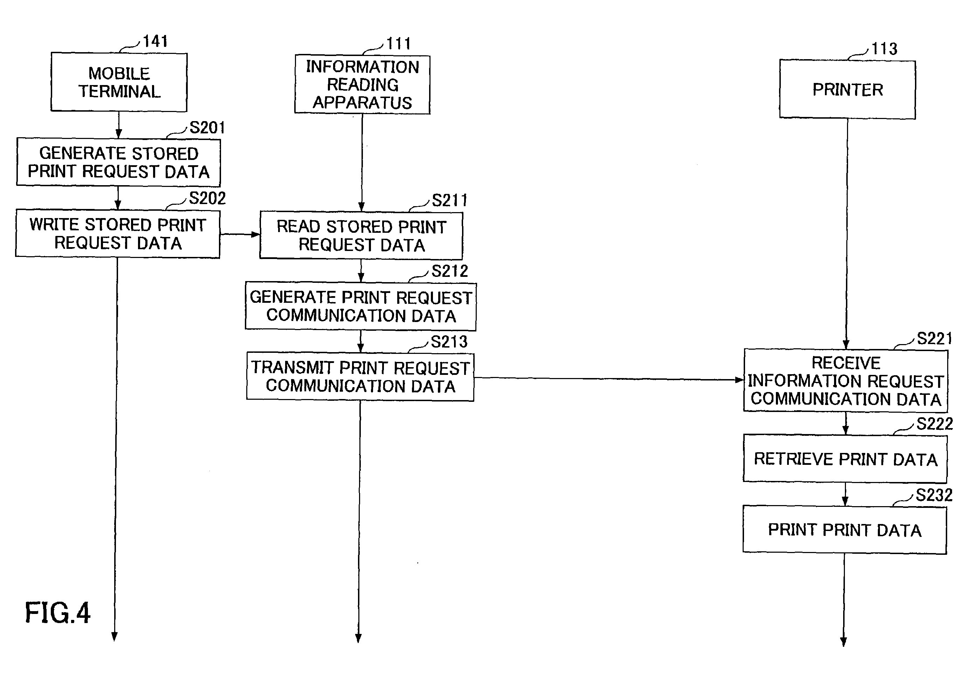

FIG. 3 shows a printing system 101 in the second embodiment. FIG. 4 is a flowchart of the print control performed in the printing system 101 in the second embodiment. The second embodiment employs a configuration in which the information management apparatus 112 and the printer 113 in the first embodiment are combined to form a printer 113. This configuration eliminates the need for the information management apparatus 112 and simplifies the printing system 101 in the second embodiment. Since the functional blocks given the same names in FIG. 1 and 3 and the process steps given the same numbers in FIG. 2 and 4 correspond to each other, the descriptions of functional blocks in FIG. 1 and process steps in FIG. 2 may be referred to for details of the functional blocks in FIG. 3 and process steps in FIG. 4.

The process in S211 shown in FIG. 4 is explained below. When the RFID chip 131 in the mobile terminal 141 is put close to the information reading apparatus 111, the information reading apparatus 111 can read the stored print request data from the RFID chip 131 in the mobile terminal 141. When the RFID chip 131 in the mobile terminal 141 is moved away from the information reading apparatus 111, the information reading apparatus 111 cannot read the stored print request data from the RFID chip 131 in the mobile terminal 141.

The process in S212 shown in FIG. 4 is explained below. The information reading apparatus 111 generates the print request communication data based on the success/failure of reading the stored print request data from the RFID chip 131 in the mobile terminal 141. When the entirety of the stored print request data is read successfully, the information indicating the success in reading the stored print request data is attached to the print request communication data. When the reading of the stored print request data fails in the middle, the information indicating the failure in reading the stored print request data is attached to the print request communication data.

The process in S232 shown in FIG. 4 is explained below. The printer 113 prints print data based on the success/failure of reading the stored print request data from the RFID chip 131 in the mobile terminal 141. In other words, the printer 113 prints print data based on the success/failure of the reading process performed by the information reading apparatus 111 on the stored print request data used for generating the print request communication data. When the information indicating the success in reading the stored print request data is attached to the print request communication data and the success in reading the stored print request data is detected, the printer 113 prints the print data. When the information indicating the failure in reading the stored print request data is attached to the print request communication data and the failure in reading the stored print request data is detected, the printer 113 cancels the printing of the print data.

According to the processes in S212 and S232 shown in FIG. 4, if the mobile terminal 141 is moved away from the information reading apparatus 111 during the reading of the stored print request data, the printing will be canceled. Therefore, users can cancel printing with such a simple operation as moving the mobile terminal 141 away from the information reading apparatus 111 during the reading of the stored print request data. Consequently, the processes in S212 and S232 shown in FIG. 4 will improve the convenience for users.

### 3. Third Embodiment

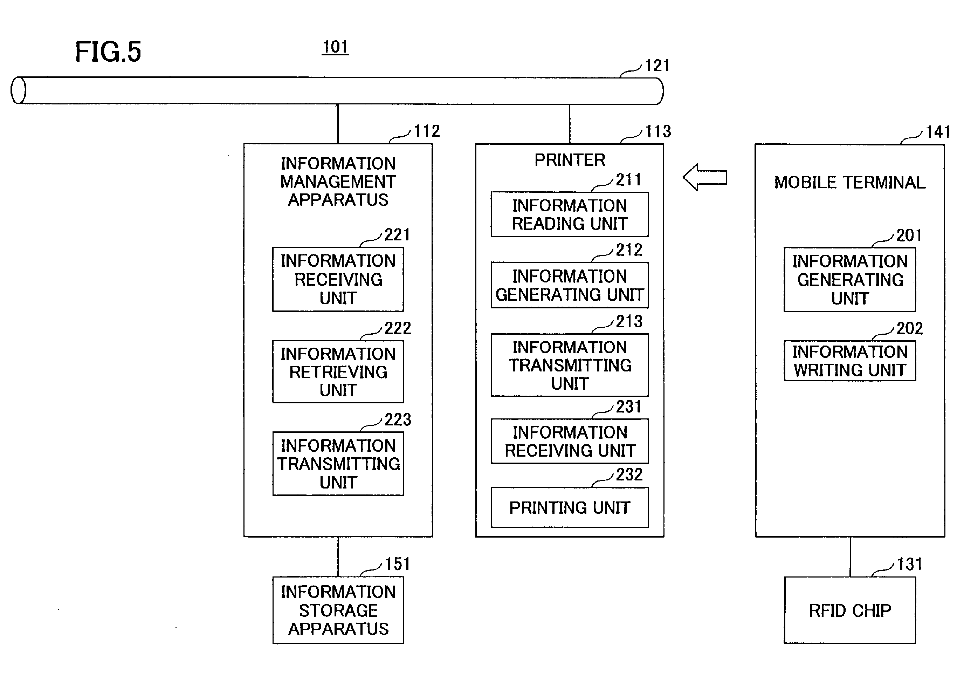

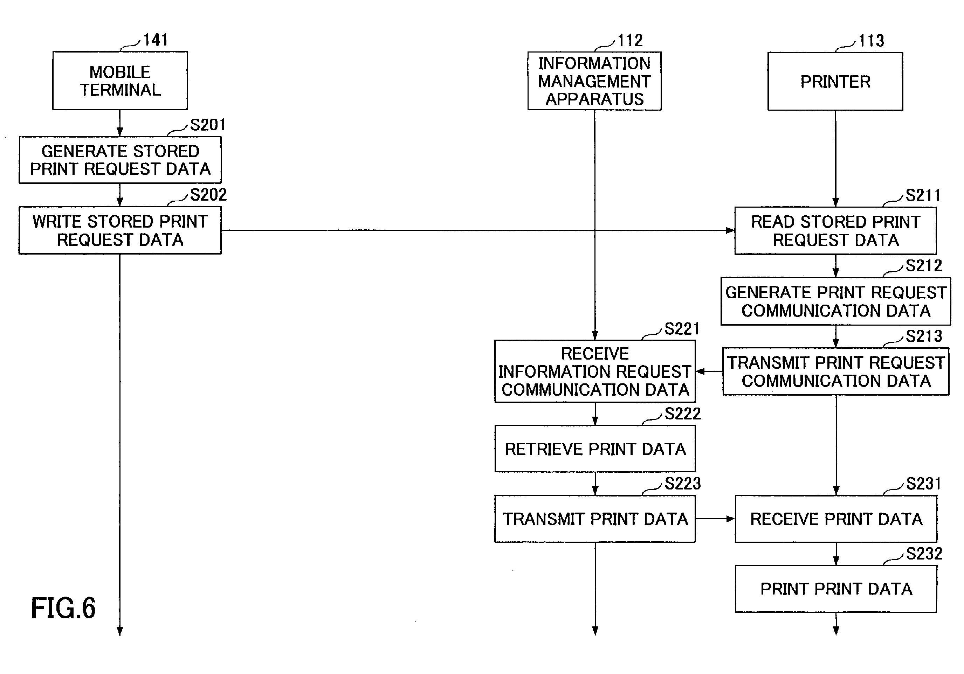

FIG. 5 shows a printing system 101 in the third embodiment. FIG. 6 is a flowchart of the print control performed in the printing system 101 in the third embodiment. The third embodiment employs a configuration in which the information reading apparatus 111 and the printer 113 in the first embodiment are combined to form a printer 113. This configuration eliminates the need for the information reading apparatus 111 and simplifies the printing system 101 in the third embodiment. Since the functional blocks given the same names in FIG. 1 and 5 and the process steps given the same numbers in FIG. 2 and 6 correspond to each other, the descriptions of functional blocks in FIG. 1 and process steps in FIG. 2 may be referred to for details of the functional blocks in FIG. 5 and process steps in FIG. 6.

The process in S211 shown in FIG. 6 is explained below. When the RFID chip 131 in the mobile terminal 141 is put close to the printer 113, the printer 113 can read the stored print request data from the RFID chip 131 in the mobile terminal 141. When the RFID chip 131 in the mobile terminal 141 is moved away from the printer 113, the printer 113 cannot read the stored print request data from the RFID chip 131 in the mobile terminal 141.

The process in S212 shown in FIG. 6 is explained below. The printer 113 generates the print request communication data based on the success/failure of reading the stored print request data from the RFID chip 131 in the mobile terminal 141. When the entirety of the stored print request data is read successfully, the information indicating the success in reading the stored print request data is attached to the print request communication data. When the reading of the stored print request data fails in the middle, the information indicating the failure in reading the stored print request data is attached to the print request communication data.

The process in S223 shown in FIG. 6 is explained below. The information management apparatus 112 transmits print data based on the success/failure of reading the stored print request data from the RFID chip 131 in the mobile terminal 141. In other words, the information management apparatus 112 transmits print data based on the success/failure of the reading process performed by the printing apparatus 113 on the stored print request data used for generating the print request communication data. When the information indicating the success in reading the stored print request data is attached to the print request communication data and the success in reading the stored print request data is detected, the information management apparatus 112 transmits the print data. When the information indicating the failure in reading the stored print request data is attached to the print request communication data and the failure in reading the stored print request data is detected, the information management apparatus 112 cancels the transmission of the print data.

According to the processes in S212 and S223 shown in FIG. 6, if the mobile terminal 141 is moved away from the printer 113 during the reading of the stored print request data, the printing will be canceled. Therefore, users can cancel printing with such a simple operation as moving the mobile terminal 141 away from the printer 113 during the reading of the stored print request data. Consequently, the processes in S212 and S223 shown in FIG. 6 will improve the convenience for users.

### 3. Fourth Embodiment

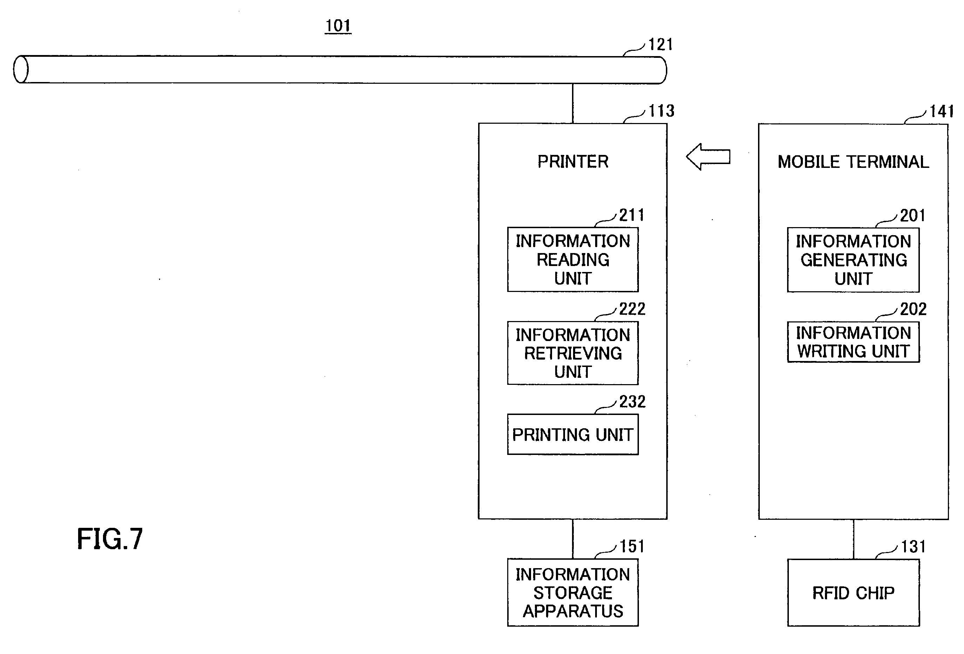

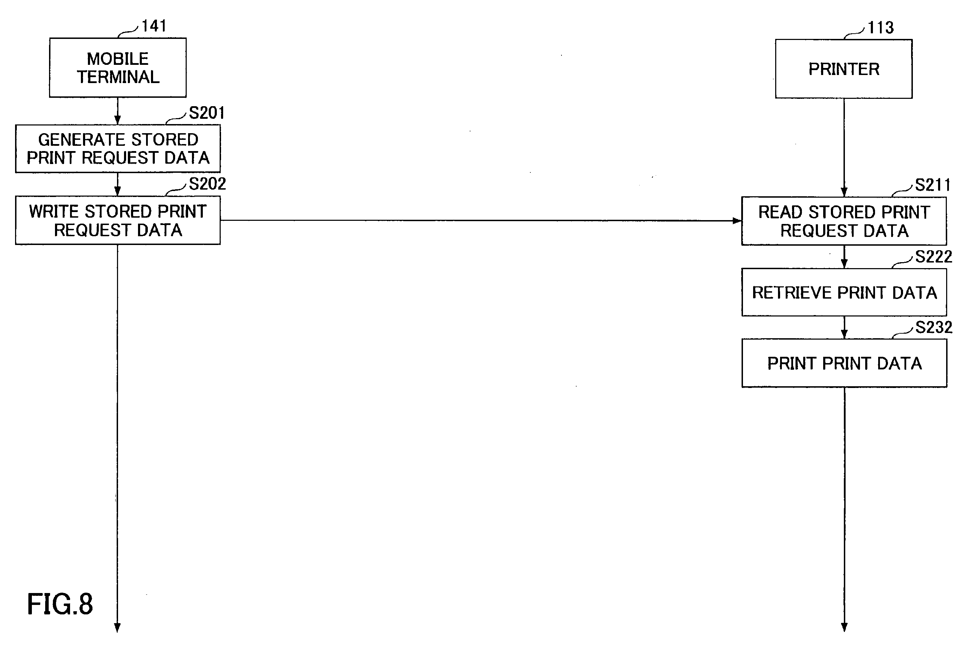

FIG. 7 shows a printing system 101 in the fourth embodiment. FIG. 8 is a flowchart of the print control performed in the printing system 101 in the fourth embodiment. The fourth embodiment employs a configuration in which the information reading apparatus 111, the information management apparatus 112, and the printer 113 in the first embodiment are combined to form a printer 113 in the fourth embodiment. This configuration eliminates the need for the information reading apparatus 111 and the information management apparatus 112, and simplifies the printing system 101 in the fourth embodiment. Since the functional blocks given the same names in FIG. 1 and 7 and the process steps given the same numbers in FIG. 2 and 8 correspond to each other, the descriptions of functional blocks in FIG. 1 and process steps in FIG. 2 may be referred to for details of the functional blocks in FIG. 7 and process steps in FIG. 8.

The process in S211 shown in FIG. 8 is explained below. When the RFID chip 131 in the mobile terminal 141 is put close to the printer 113, the printer 113 can read the stored print request data from the RFID chip 131 in the mobile terminal 141. When the RFID chip 131 in the mobile terminal 141 is moved away from the printer 113, the printer 113 cannot read the stored print request data from the RFID chip 131 in the mobile terminal 141.

The process in S232 shown in FIG. 8 is explained below. The printer 113 prints print data based on the success/failure of reading the stored print request data from the RFID chip 131 in the mobile terminal 141. When the entirety of the stored print request data is read successfully, the printer 113 prints the print data. When the reading of the stored print request data fails in the middle, the printer 113 cancels the printing of the print data.

According to the process in S232 shown in FIG. 8, if the mobile terminal 141 is moved away from the printer 113 during the reading of the stored print request data, the printing will be canceled. Therefore, users can cancel printing with such a simple operation as moving the mobile terminal 141 away from the printer 113 during the reading of the stored print request data. Consequently, the process in S232 shown in FIG. 8 will improve the convenience for users.

The variant of the process in S222 shown in FIG. 8 is explained below. The printer 113 may be implemented so that the retrieval of the print data is suspended when the reading of the stored print request data in the RFID chip 131 in the mobile terminal 141 becomes impossible after being possible. Also, the printer 113 may be implemented so that the retrieval of the print data is resumed when the reading of the stored print request data in the RFID chip 131 in the mobile terminal 141 becomes possible after being impossible.

According to the variant of the process in S222 shown in FIG. 8, if the mobile terminal 141 is put close to the printer 113 again after being moved away during the reading of the stored print request data, the printing will be resumed after being suspended. Therefore, users can suspend and resume printing with such simple operations as moving the mobile terminal 141 away from and close to the printer 113. Consequently, the variant of the process in S222 shown in FIG. 8 will improve the convenience for users.

When the retrieval of the print data is suspended, information such as print data, printed number of copies, and printed number of pages is saved as stored print-related data and used when the retrieval of the print data is resumed. The variant process can also be used instead of the process in S222 shown in FIG. 2, 4, or 6.

The present invention is not limited to the specifically disclosed embodiments, and variations and modifications may be made without departing from the scope of the present invention.

## Claims

1. An information reading apparatus, **characterized by**:
an information reading unit which reads stored print request data from an information storage medium;
an information generating unit which generates print request communication data according to the stored print request data; and
an information transmitting unit which transmits the print request communication data; wherein
the information generating unit generates the print request communication data based on success/failure of reading the stored print request data.

2. An information management apparatus, **characterized by**:
an information receiving unit which receives print request communication data;
an information retrieving unit which retrieves print data corresponding to a print request in the print request communication data; and
an information transmitting unit which transmits the print data; wherein
the information transmitting unit transmits the print data based on success/failure of reading stored print request data used for generating the print request communication data.

3. A printing apparatus, **characterized by**:
an information receiving unit which receives print request communication data;
an information retrieving unit which retrieves print data corresponding to a print request in the print request communication data; and
a printing unit which prints the print data; wherein the printing unit prints the print data based on success/failure of reading stored print request data used for generating the print request communication data.

4. A printing apparatus, **characterized by**:
an information reading unit which reads stored print request data from an information storage medium;
an information generating unit which generates print request communication data according to the stored print request data;
an information transmitting unit which transmits the print request communication data;
an information receiving unit which receives print data corresponding to a print request in the print request communication data; and
a printing unit which prints the print data; wherein the information generating unit generates the print request communication data based on success/failure of reading the stored print request data.

5. A printing apparatus, **characterized by**:
an information reading unit which reads stored print request data from an information storage medium;
an information retrieving unit which retrieves print data corresponding to a print request in the stored print request data; and
a printing unit which prints the print data; wherein the printing unit prints the print data based on success/failure of reading the stored print request data.

6. A print control method performed by an information reading apparatus, **characterized by**:
an information reading step which reads stored print request data;
an information generating step which generates print request communication data according to the stored print request data; and
an information transmitting step which transmits the print request communication data; wherein
the information generating step generates the print request communication data based on success/failure of reading the stored print request data.

7. A print control method performed by a printing apparatus, **characterized by**:
an information reading step which reads stored print request data;
an information generating step which generates print request communication data according to the stored print request data;
an information transmitting step which transmits the print request communication data;
an information receiving step which receives print data corresponding to a print request in the print request communication data; and
a printing step which prints the print data; wherein the information generating step generates the print request communication data based on success/failure of reading the stored print request data.

8. A print control method performed by an information management apparatus, **characterized by**:
an information receiving step which receives print request communication data;
an information retrieving step which retrieves print data corresponding to a print request in the print request communication data; and
an information transmitting step which transmits the print data; wherein
the information transmitting step transmits the print data based on success/failure of reading stored print request data used for generating the print request communication data.

9. A print control method as claimed in claim 8, **characterized in that** the information retrieving step suspends the retrieval of the print data when the reading of the stored print request data becomes impossible after being possible.

10. A print control method as claimed in claim 9, **characterized in that** the information retrieving step resumes the retrieval of the print data when the reading of the stored print request data becomes possible after being impossible.

11. A print control method according to any one of claims 8 to 10, **characterized in that** the information retrieving step retrieves the print data from an information storage apparatus inside the information management apparatus.

12. A print control method as claimed in claim 11, further **characterized by**:
an information deleting step which deletes stored print-related data in the information storage apparatus.

13. A print control method according to any one of claims 8 to 12, **characterized in that** the information retrieving step retrieves the print data from outside the information management apparatus.

14. A print control method performed by a printing apparatus, **characterized by**:
an information receiving step which receives print request communication data;
an information retrieving step which retrieves print data corresponding to a print request in the print request communication data; and
a printing step which prints the print data; wherein the printing step prints the print data based on success/failure of reading stored print request data used for generating the print request communication data.

15. A print control method as claimed in claim 14, **characterized in that** the information retrieving step suspends the retrieval of the print data when the reading of the stored print request data becomes impossible after being possible.

16. A print control method as claimed in claim 15, **characterized in that** the information retrieving step resumes the retrieval of the print data when the reading of the stored print request data becomes possible after being impossible.

17. A print control method according to any one of claims 14 to 16, **characterized in that** the information retrieving step retrieves the print data from an information storage apparatus inside the printing apparatus.

18. A print control method as claimed in claim 17, further **characterized by**:
an information deleting step which deletes stored print-related data in the information storage apparatus.

19. A print control method according to any one of claims 14 to 18, **characterized in that** the information retrieving step retrieves the print data from outside the printing apparatus.

20. A print control method performed by a printing apparatus, **characterized by**:
an information reading step which reads stored print request data;
an information retrieving step which retrieves print data corresponding to a print request in the stored print request data; and
a printing step which prints the print data; wherein the printing step prints the print data based on success/failure of reading the stored print request data.

21. A print control method according to either claim 20 or claim 21, **characterized in that** the information retrieving step suspends the retrieval of the print data when the reading of the stored print request data becomes impossible after being possible.

22. A print control method as claimed in claim 21, **characterized in that** the information retrieving step resumes the retrieval of the print data when the reading of the stored print request data becomes possible after being impossible.

23. A print control method according to any one of claims 20 to 22, **characterized in that** the information retrieving step retrieves the print data from an information storage apparatus inside the printing apparatus.

24. A print control method as claimed in claim 23, further **characterized by**:
an information deleting step which deletes stored print-related data in the information storage apparatus.

25. A print control method according to any one of claims 20 to 24, **characterized in that** the information retrieving step retrieves the print data from outside the printing apparatus.

26. A computer program comprising program code means that, when executed on a computer system, instructs a system to carry out the steps according to any one of claims 6 to 25.

27. A computer readable storage medium having recorded thereon program code means that, when executed on a computer system, instructs a system to carry out the steps according to any one of claims 6 to 25.
